# EUROPEAN PATENT SPECIFICATION

(11) **EP 3 167 841 B1**
(45) Date of publication and mention of the grant of the patent: **05.09.2018**
(21) Application number: 16169485.6
(22) Date of filing: 13.05.2016
(51) Int. Cl.: A61C 8/00

(54) **ROOT ASSEMBLY WITH POSITION RECOGNITION**
WURZELANORDNUNG MIT POSITIONSERKENNUNG
ENSEMBLE RACINE AVEC RECONNAISSANCE DE POSITION

(43) Date of publication of application: 17.05.2017
(73) Proprietor: Taiwan Shan Yin International Co., Ltd., Kaohsiung City 806 (TW); Biomate Medical Devices Technology Co., Ltd., Kaohsiung City 821 (TW)
(72) Inventor: Wu, Chien-Te, 10576 Taipei City (TW)
(74) Representative: Cabinet Chaillot

(56) References cited:
- EP-A1- 2 878 280
- WO-A1-2016/142912
- US-A1- 2011 200 969

## Description

### BACKGROUND OF THIS INVENTION

### 1. Field of this invention

This invention relates to a dental root assembly and relates particularly to a root assembly whose positioning operation can be recognized to ensure a firm engagement between the positioning device and the implant body.

### 2. Description of the Related Art

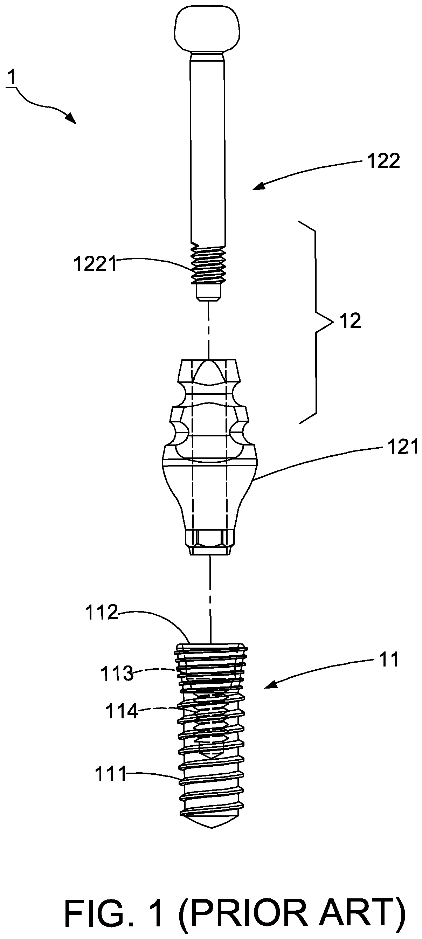

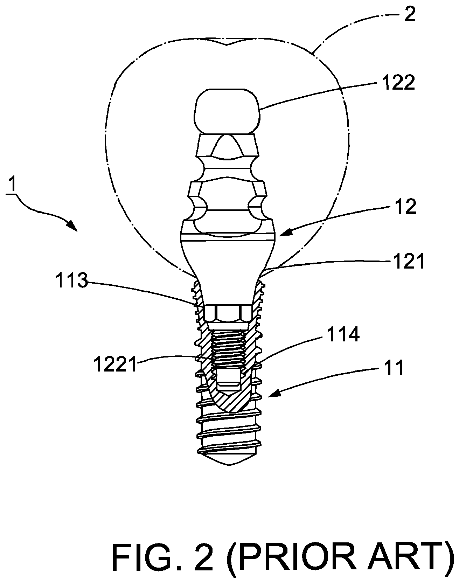

Referring to Fig. **1** and Fig. **2****,** a conventional root assembly 1 includes an implant **11** and a positioning device **12** connected to the implant **11.** A top end of the implant **11** forms a positioning hole **112.** The implant **11** further has an engaging portion **111** opposite to the positioning hole **112.** The positioning hole **112** is partitioned into an engagement area **114** and a positioning area **113** formed between the engagement area **114** and the top end. The positioning device **12** has a seat **121** where an artificial tooth **2** is attached and a positioning unit **122** extending through and out of the seat **121.** The positioning unit **122** has a spirally threaded section **1221.** When the threaded section **1221** is threadedly engaged with the engagement area **114,** the seat **121** is driven by the positioning unit **122** and then positioned on the positioning area **113.**

In use, after the implant **11** is implanted into an alveolar bone (not shown) to complete a first stage of an implanting treatment, the positioning unit **122** fixes the seat **121** on the implant **11** threadedly to help an engagement between the implant **11** and the alveolar bone. Finally, a crown impression is carried out, and then a finished artificial tooth **2** is attached to the positioning device **12** by an adhesive used in dentistry to achieve the full implanting treatment.

The use of the conventional root assembly **1**, as shown in Fig. **2**, still has problems. For example, a screw-in operation of the positioning unit **122** into the engagement area **114** stops when the dentist thinks that the seat **121** is well attached to the positioning area **113** according to his experiences and a determination of an X-ray machine. However, because part of the seat **121** and the implant **11** is easily shaded by the gum and a peripheral surface of the seat **121** is smooth, the X-ray machine may fail to reveal full states, with the result that the determination is not always correct. Furthermore, the dentist usually uses his subjective sensation and experiences to attach the positioning device **12** to the implant **11,** but there is still possibility of causing the positioning device **12** to stand slantwise and position unstably. If the positioning device **12** is not held in position, the artificial tooth **2** becomes loose easily. Even though the positioning device **12** is successfully held in position, the implant **11** and seat **121** may rub against each other by an undue tight screwing action. This situation is unfavorable for mounting the artificial tooth **2** on the positioning device **12.**

EP2878280 and US2011/0200969 disclose root assemblies.

### SUMMARY OF THIS INVENTION

An object of this invention is to provide a root assembly which can recognize the state of the movement of the positioning device during the screwing operation to ensure that the positioning device is stably attached to the implant body without regard to the shading of the gum and attain a good, precise and firm positioning effect of the artificial tooth.

A root assembly with position recognition of this invention, as defined in claim 1, includes an implant body and a positioning device connected to the implant body. The implant body has a positioning hole formed through one end thereof and an engaging portion opposite to the positioning hole. The positioning hole has an end edge formed on the one end of the implant body and is partitioned into an engagement area and a positioning area formed between the engagement area and the end edge. The positioning device has a positioning seat where an artificial tooth can be attached and a positioning unit extending through and out of the positioning seat. The positioning seat has a first recognition portion annularly formed thereon. The positioning unit penetrates through the positioning seat to allow the threaded section to engage the engagement area gradually, a gradual engagement between the threaded section and the engagement area allows the positioning seat to gradually enter the positioning area until the first recognition portion meets the end edge of the positioning hole to recognize that the positioning seat is positioned on the implant body. The positioning unit has a threaded section capable of threadedly engaging the engagement area of the implant body. The positioning unit passes through the positioning seat and activates a movement of the positioning seat to threadedly engage the implant body. The location of the first recognition portion corresponding to the end edge of the positioning hole functions as a mark or recognition to allow the user to ensure that the positioning device is exactly fixed on the implant body. Therefore, an undue tight screwing action or a loose combination between the positioning device and the implant body can be prevented, and the problem that the artificial tooth becomes loose can also be solved.

The positioning unit has a second recognition portion formed near the threaded section. The second recognition portion is situated at a place corresponding to the first recognition portion and the end edge of the positioning hole to recognize an engagement between the positioning unit and the positioning seat.

Preferably, at least one recess is formed on said positioning seat so that the recess can be filled with an additive to attach the artificial tooth to the positioning device more stably.

Preferably, the first recognition portion can be in a form of an annular groove, engraved lines or other suitable designs.

Preferably, the second recognition portion can also be in a form of an annular groove, engraved lines or other suitable designs.

The advantages of this invention are more apparent upon reading the following descriptions in conjunction with the drawings.

### BRIEF DESCRIPTION OF THE DRAWINGS

Fig. 1 is an exploded view showing a conventional structure;
Fig. 2 is a schematic view showing the conventional structure in use;
Fig. 3 is an exploded view showing a first preferred embodiment of this invention;
Fig. 4 is a schematic view showing the first preferred embodiment of this invention in use;
Fig. 5 is a schematic view showing another variation of the first preferred embodiment; and
Fig. 6 is a schematic view showing a second preferred embodiment of this invention.

### DETAILED DESCRIPTION OF THE PREFERRED EMBODIMENTS

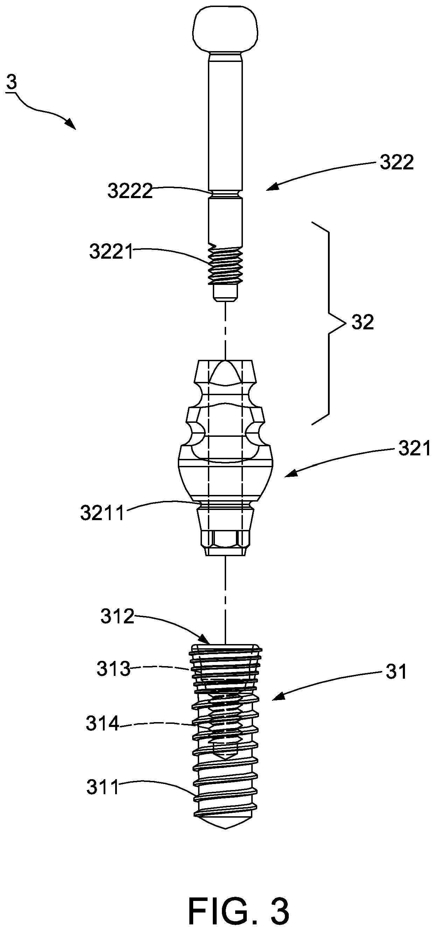

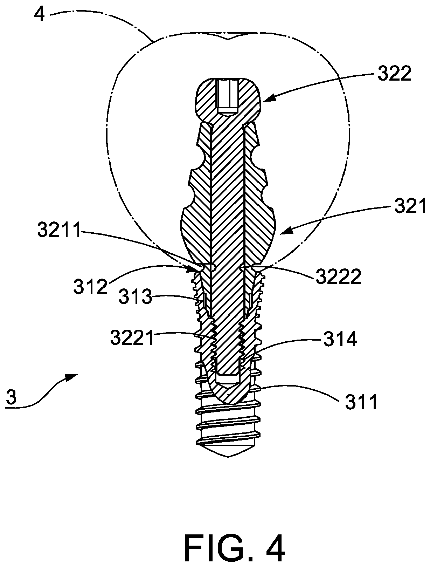

Referring to Fig. **3** and Fig. **4****,** a root assembly **3** with position recognition of a first preferred embodiment comprises an implant body **31** and a positioning device **32** connected to the implant body **31.** The implant body **31** has a positioning hole **312** formed through one end thereof and an engaging portion **311** disposed on another end thereof opposite to the positioning hole **312.** The positioning hole **312** has an end edge formed on the one end and is partitioned into an engagement area **314** away from the end edge and a positioning area **313** formed between the engagement area **314** and the end edge.

The positioning device **32** includes a positioning seat **321** to which an artificial tooth **4** is connected and a positioning unit **322** extending through and out of the positioning seat **321.** A first recognition portion **3211** is formed on the positioning seat **321** and adapted to meet the end edge of the positioning hole **312** in order to recognize that the positioning seat **321** is really positioned or fixed on the implant body **31.** Furthermore, the positioning unit **322** has a threaded section **3221** disposed on one end thereof. The positioning unit **322,** preferably, can also have a second recognition portion **3222** formed near the threaded section **3221.** Likewise, the second recognition portion **3222** can be situated at a place corresponding to the first recognition portion **3211** and the end edge of the positioning hole **312,** thereby functioning as a mark to recognize that the positioning unit **322** is really engaged with the positioning seat **321.**

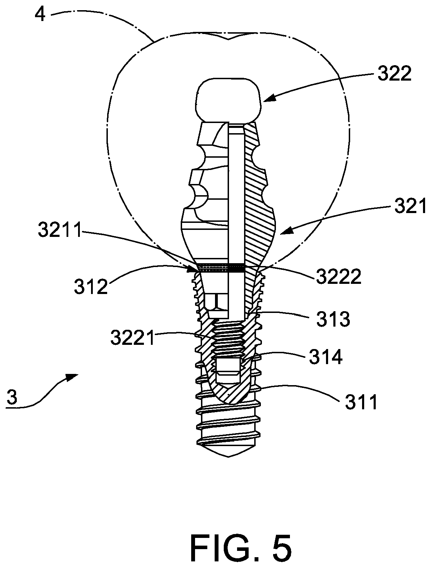

Please be noted that the first recognition portion **3211** and the second recognition portion **3222** can be, but not limited to, in a form of an annular groove shown in Fig. **3** and Fig. **4****,** engraved lines shown in Fig. **5** or other suitable designs. Both of the first recognition portion **3211** and the second recognition portion **3222** allow the dentist to recognize the movement or positioning state of the positioning device **32** easily and exactly during the implanting treatment.

The operation of this invention is described with the aid of Fig. **3** and Fig. **4****.** The engaging portion **311** of the implant body **31** is implanted into a pre-drilled hole of an alveolar bone (not shown) to complete a first stage of the implanting treatment. A second stage of the treatment is carried out by extending the threaded section **3221** of the positioning unit **322** through and out of the positioning seat **321.** The entry of the positioning unit **322** into the positioning seat **321** allows both of the recognition portions **3211, 3222** to meet each other. In other words, the second recognition portion **3222** is fixedly situated at a place corresponding to the first recognition portion **3211,** and this allows the positioning seat **321** to be driven and moved by the positioning unit **322.** Then, the threaded section **3221** out of the positioning seat **321** enters the positioning hole **312** of the implant body **31** and gradually engages the engagement area **314.** During the gradual engagement between the threaded section **3221** and the engagement area **314,** the positioning seat **321** gradually enters the positioning area **313.** Because the first recognition portion **3211** is annularly formed on the positioning seat **321,** the dentist can visually know the movement of the positioning seat **321** and recognize whether the first recognition portion **3211** meets the end edge of the positioning hole **312.** Accordingly, the problem that the positioning seat **321** and the positioning hole **312** unduly rub against each other can be solved. The movement of the positioning device **32** stops when the first recognition portion **3211** meets the end edge of the positioning hole **312.** After the visual recognition is done, a further image capturing method can be used to determine whether the locations of the recognition portions **3222, 3211** fitly meet the end edge of the positioning hole **312** and then make a final precise determination. Thus, it is certain that the positioning seat **321** is fully positioned on the implant body **31** to prevent an undue tight screwing action and a loose combination problem. Finally, a crown impression is executed, and then an artificial tooth **4** is well made and attached to the positioning seat **321** to complete the entire implanting treatment.

Accordingly, the first recognition portion **3211** and the second recognition portion **3222** function as a mark of recognizing and determining the position quickly in an implanting operation, thereby preventing the positioning device **32** and the implant body **31** from unduly rubbing against each other because of an over tight screwing operation between the positioning seat **321** and the positioning hole **312.** The recognition portions **3211, 3222** also prevents the artificial tooth **4** from loosening because of the incomplete positioning problem or the slanting state of the positioning device **32.** Therefore, the structure of this invention increases the convenience and accuracy of the implanting operation.

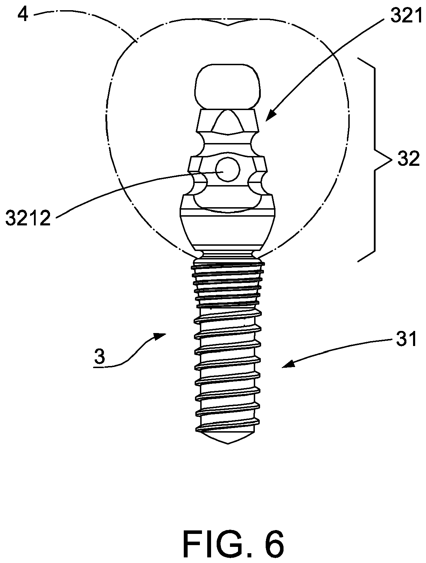

Referring to Fig. **6****,** a root assembly **3** of a second preferred embodiment has an implant body **31** and a positioning device **32.** Other detailed elements and concatenation of correlated elements of the second preferred embodiment are identical to those of the first preferred embodiment and herein are omitted. The second preferred embodiment is characterized in that at least one recess **3212** is formed on the positioning seat **321.** Accordingly, when the artificial tooth **4** coated with a dental adhesive (not shown) is to be attached to the positioning seat **321,** the recess **3212** can receive the residual adhesive to adhere the artificial tooth **4** to the positioning device **32** more stably. This arrangement precludes the occurrence of an occlusal interference of the artificial tooth **4.**

To sum up, this invention takes advantage of a first recognition portion of the positioning seat corresponding to the end edge of the positioning hole of the implant body to allow users to recognize the position visually and quickly. The second recognition portion formed on the positioning unit also assists an image capturing system in recognizing, correcting and positioning more precisely, thereby preventing an undue tight screw-in operation between the positioning device and the implant body and preventing an incomplete combination and a slanting state of the positioning device. Thus, the mounting of the artificial tooth can be unaffected, and the convenience and accuracy of the implanting operation can be largely increased.

## Claims

1. A root assembly (3) with position recognition comprising an implant body (31) and a positioning device (32) connected to said implant body (31), said implant body (31) including a positioning hole (312) formed through one end thereof and an engaging portion (311) opposite to said positioning hole (312), said positioning hole (312) having an end edge and being partitioned into an engagement area (314) away from said end edge and a positioning area (313) formed between said engagement area (314) and said end edge, said positioning device (32) including a positioning seat (321) to which an artificial tooth (4) is connected and a positioning unit (322) extending through and out of said positioning seat (321), said positioning unit (322) having a threaded section (3221) disposed on one end thereof, said threaded section (3221) of said positioning unit (322) being capable of threadedly engaging said engagement area (314) of said positioning hole (312) to allow said positioning seat (321) to be positioned on said positioning area (313) of said positioning hole (312);
wherein a first recognition portion (3211) is annularly formed on said positioning seat (321),
said positioning unit (322) penetrating through said positioning seat (321) to allow said threaded section (3221) to engage said engagement area (314) gradually, a gradual engagement between said threaded section (3221) and said engagement area (314) allowing said positioning seat (321) to gradually enter said positioning area (313) until said first recognition portion (3211) meeting said end edge of said positioning hole (312), whereby said positioning seat (321) is positioned on said positioning area (313) of said positioning hole (312) to recognize a firm engagement between said positioning seat (321) and said implant body (31), the root assembly (3) being **characterized in that** said positioning unit (322) has a second recognition portion (3222) formed near said threaded section (3221), said second recognition portion (3222) being situated at a place corresponding to said first recognition portion (3211) and said end edge of said positioning hole (312) to recognize an engagement between said positioning unit (322) and said positioning seat (321).

2. The root assembly (3) according to claim 1, wherein at least one recess (3212) is formed on said positioning seat (321).

3. The root assembly (3) according to claim 1, wherein said first recognition portion (3211) is in a form of an annular groove.

4. The root assembly (3) according to claim 1, wherein said first recognition portion (3211) and said second recognition portion (3222) are in a form of an annular groove.

5. The root assembly (3) according to claim 1, wherein said first recognition portion (3211) is formed by engraved lines.

6. The root assembly (3) according to claim 1, wherein said first recognition portion (3211) and said second recognition portion (3222) are formed by engraved lines.

## Patentansprüche

1. Wurzelanordnung (3) mit Positionserkennung, die einen Implantatkörper (31) und eine Positionierungsvorrichtung (32) umfasst, die mit besagtem Implantatkörper (31) verbunden ist, besagter Implantatkörper (31) schließt ein Positionierungsloch (312) ein, gebildet durch ein Ende davon, und ein Eingriffsteil (311) gegenüber besagtem Positionierungsloch (312), besagtes Positionierungsloch (312) umfasst eine Abschlusskante und ist in einen Eingriffsbereich (314), weg von besagter Abschlusskante, und einen Positionierungsbereich (313) zwischen besagtem Eingriffsbereich (314) und besagter Abschlusskante untergeteilt, besagte Positionierungsvorrichtung (32) schließt einen Positionierungssitz (321) ein, an dem ein künstlicher Zahn (4) verbunden ist, und eine Positionierungseinheit (322), die durch besagten Positionierungssitz (321) und aus ihm heraus verläuft, besagte Positionierungseinheit (322) umfasst einen Gewindeabschnitt (3221), der auf einem Ende davon angeordnet ist, besagter Gewindeabschnitt (3221) der besagten Positionierungseinheit (322) kann mit besagtem Eingriffsbereich (314) des besagten Positionierungslochs (312) verschraubt werden, damit besagter Positionierungssitz (321) auf besagter Positionierungsfläche (313) des besagten Positionierungslochs (312) positioniert werden kann;
wobei ein erstes Erkennungsteil (3211) ringförmig auf besagtem Positionierungssitz (321) gebildet ist,
besagte Positionierungseinheit (322) durchdringt besagten Positionierungssitz (321), um besagtem Gewindeabschnitt (3221) zu erlauben, in besagten Eingriffsbereich (314) stufenweise einzugreifen, ein allmählicher Eingriff zwischen besagtem Gewindeabschnitt (3221) und besagtem Eingriffsbereich (314) erlaubt es, dass besagter Positionierungssitz (321) stufenweise auf besagte Positionierungsfläche (313) tritt, bis besagtes erste Erkennungsteil (3211) auf besagte Endkante des besagten Positionierungslochs (312) trifft, wodurch besagter Positionierungssitz (321) auf besagter Positionierungsfläche (313) des besagten Positionierungslochs (312) positioniert wird, um einen festen Eingriff zwischen besagtem Positionierungssitz (321) und besagtem Implantatkörper (31) zu erkennen, wobei die Wurzelanordnung (3) **dadurch gekennzeichnet ist, dass** die Positionierungseinheit (322) ein zweites Erkennungsteil (3222) hat, das nahe besagtem Gewindeabschnitt (3221) gebildet ist, besagtes zweite Erkennungsteil (3222) ist an einem Ort befindlich, der besagtem ersten Erkennungsteil (3211) und besagter Endkante des besagten Positionierungslochs (312) entspricht, um einen Eingriff zwischen besagter Positionierungseinheit (322) und besagtem Positionierungssitz (321) zu erkennen.

2. Wurzelanordnung (3) nach Anspruch 1, wobei mindestens eine Aussparung (3212) auf besagtem Positionierungssitz (321) gebildet ist.

3. Wurzelanordnung (3) nach Anspruch 1, wobei besagtes erste Erkennungsteil (3211) die Form einer Ringnut hat.

4. Wurzelanordnung (3) nach Anspruch 1, wobei besagtes erste Erkennungsteil (3211) und besagtes zweite Erkennungsteil (3222) die Form einer Ringnut haben.

5. Wurzelanordnung (3) nach Anspruch 1, wobei besagtes erste Erkennungsteil (3211) durch gravierte Linien gebildet wird.

6. Wurzelanordnung (3) nach Anspruch 1, wobei besagtes erste Erkennungsteil (3211) und besagtes zweite Erkennungsteil (3222) durch gravierte Linien gebildet werden.

## Revendications

1. Ensemble racine (3) avec reconnaissance de position, comprenant un corps d'implant (31) et un dispositif de positionnement (32) relié audit corps d'implant (31), ledit corps d'implant (31) comprenant un trou de positionnement (312) formé à travers une extrémité de celui-ci et une partie d'engagement (311) opposée audit trou de positionnement (312), ledit trou de positionnement (312) ayant un bord d'extrémité et étant séparé en une zone d'engagement (314) à distance dudit bord d'extrémité et une zone de positionnement (313) formée entre ladite zone d'engagement (314) et ledit bord d'extrémité, ledit dispositif de positionnement (32) comprenant un siège de positionnement (321) auquel une dent artificielle (4) est reliée et une unité de positionnement (322) s'étendant à travers et hors dudit siège de positionnement (321), ladite unité de positionnement (322) ayant une section filetée (3221) disposée sur une extrémité de celle-ci, ladite section filetée (3221) de ladite unité de positionnement (322) étant capable d'engager par filetage ladite zone d'engagement (314) dudit trou de positionnement (312) pour permettre audit siège positionnement (321) d'être positionné sur ladite zone de positionnement (313) dudit trou de positionnement (312) ;
une première partie de reconnaissance (3211) étant formée de manière annulaire sur ledit siège de positionnement (321),
ladite unité de positionnement (322) pénétrant à travers ledit siège de positionnement (321) pour permettre à ladite section filetée (3221) d'engager ladite zone d'engagement (314) progressivement, un engagement progressif entre ladite section filetée (3221) et ladite zone d'engagement (314) permettant audit siège de positionnement (321) d'entrer progressivement dans ladite zone de positionnement (313) jusqu'à ce que ladite première partie de reconnaissance (3211) rencontre ledit bord d'extrémité dudit trou de positionnement (312), ce par quoi ledit siège de positionnement (321) est positionné sur ladite zone de positionnement (313) dudit trou de positionnement (312) pour reconnaître un engagement solide entre ledit siège de positionnement (321) et ledit corps d'implant (31), l'ensemble racine (3) étant **caractérisé par le fait que** ladite unité de positionnement (322) a une seconde partie de reconnaissance (3222) formée à proximité de ladite section filetée (3221), ladite seconde partie de reconnaissance (3222) étant située à un emplacement correspondant à ladite première partie de reconnaissance (3211) et audit bord d'extrémité dudit trou de positionnement (312) pour reconnaître un engagement entre ladite unité de positionnement (322) et ledit siège de positionnement (321).

2. Ensemble racine (3) selon la revendication 1, dans lequel au moins un évidement (3212) est formé sur ledit siège de positionnement (321).

3. Ensemble racine (3) selon la revendication 1, dans lequel ladite première partie de reconnaissance (3211) se présente sous la forme d'une gorge annulaire.

4. Ensemble racine (3) selon la revendication 1, dans lequel ladite première partie de reconnaissance (3211) et ladite seconde partie de reconnaissance (3222) se présentent sous la forme d'une gorge annulaire.

5. Ensemble racine (3) selon la revendication 1, dans lequel ladite première partie de reconnaissance (3211) est formée par des lignes gravées.

6. Ensemble racine (3) selon la revendication 1, dans lequel ladite première partie de reconnaissance (3211) et ladite seconde partie de reconnaissance (3222) sont formées par des lignes gravées.
